# EUROPÄISCHE PATENTANMELDUNG

(11) **EP 2 863 156 A1**
(43) Veröffentlichungstag der Anmeldung: **22.04.2015**
(21) Anmeldenummer: 13004981.0
(22) Anmeldetag: 17.10.2013
(51) Int. Cl.: F25J 3/04, B01D 53/04

(54) **Verfahren zur Gewinnung wenigstens eines Luftprodukts in einer Luftbehandlungsanlage und Luftbehandlungsanlage**

(71) Anmelder: Linde Aktiengesellschaft, 80331 München (DE)
(72) Erfinder: Windmeier, Christoph, 82538 Geretsried (DE); Lautenschlager, Tobias, 82194 Gröbenzell (DE); Goloubev, Dimitri, 80804 München (DE); Hoffmann, Rainer, 82008 Unterhaching (DE)
(74) Vertreter: Imhof, Dietmar

(57) **Zusammenfassung**

Die Erfindung schlägt ein Verfahren zur Gewinnung wenigstens eines Luftprodukts in einer Luftbehandlungsanlage vor, in der einem Einsatzluftstrom (a) mittels eines Adsorbersatzes (4) mit zumindest zwei Adsorbereinheiten (41, 42) zumindest Wasser und/oder Kohlendioxid entzogen wird, wobei der Einsatzluftstrom (a) jeweils nur durch eine oder nur durch einen Teil der Adsorbereinheiten (41, 42) geführt und währenddessen zeitweise ein erwärmtes Regeneriergas (c) durch eine andere oder durch einen anderen Teil der Adsorbereinheiten (41, 42) geführt wird. Zum Erwärmen des Regeneriergases (c) wird einem Teilstrom (A) des Einsatzluftstroms (a) Wärme entzogen und zur Übertragung auf das Regeneriergas (c) bereitgestellt. Zur Bildung des Teilstroms (A) wird Luft des Einsatzluftstroms (a) verwendet, die stromauf und/oder stromab zumindest einer Verdichterstufe (11-13, 61-63) zumindest eines mehrstufigen Verdichters (1, 6) der Luftbehandlungsanlage (100) von Luft des Einsatzluftstroms (a), die durch die zumindest eine Verdichterstufe (11-13, 61-63) geführt wird, abgezweigt und nach dem Entziehen der Wärme stromauf eines Destillationssäulensystems (10) der Luftbehandlungsanlage (100) zumindest teilweise wieder mit der nach dem Abzweigen verbliebenen Luft vereinigt wird. Eine Luftbehandlungsanlage (100) ist ebenfalls Gegenstand der Erfindung.

## Beschreibung

Die Erfindung betrifft ein Verfahren zur Gewinnung wenigstens eines Luftprodukts in einer Luftbehandlungsanlage und eine entsprechende Luftbehandlungsanlage gemäß den Oberbegriffen der unabhängigen Patentansprüche.

### Stand der Technik

Die Herstellung von Luftprodukten in flüssigem oder gasförmigem Zustand durch Tieftemperaturzerlegung von Luft in Luftzerlegungsanlagen ist bekannt. Derartige Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Ferner können Vorrichtungen zur Gewinnung weiterer Luftkomponenten, insbesondere der Edelgase Krypton, Xenon und/oder Argon, vorgesehen sein (vgl. beispielsweise F.G. Kerry, Industrial Gas Handbook: Gas Separation and Purification, Boca Raton: CRC Press, 2006; Kapitel 3: Air Separation Technology).

Die Tieftemperaturzerlegung, aber auch die Verflüssigung von Luft in reinen Luftverflüssigungsanlagen, erfolgt weit unterhalb der Umgebungstemperatur. Um hierbei eine Verlegung von Rohrquerschnitten, Wärmetauscherpassagen usw. durch ausfrierende Luftbestandteile, insbesondere Kohlendioxid und Wasser, zu verhindern, müssen diese vor der Abkühlung der Luft auf die Rektifikationstemperatur abgetrennt werden. Die Abtrennung findet üblicherweise in Molekularsiebadsorbern statt, durch die die Luft vor ihrer Abkühlung geführt wird. Da die Aufnahmekapazität der Molekularsiebadsorber begrenzt ist, wird die Luftzufuhr von Zeit zu Zeit gestoppt und die Molekularsiebadsorber werden durch ein Regeneriergas, das frei von Kohlendioxid und Wasser, aber aufnahmefähig für diese Komponenten ist, regeneriert. Um einen kontinuierlichen Betrieb einer Luftzerlegungsanlage zu gewährleisten, sind dabei mindestens zwei Molekularsiebadsorber oder zwei Gruppen von entsprechenden Molekularsiebadsorbern vorgesehen, von denen jeweils der bzw. die eine von der vorzureinigenden Luft und der bzw. die andere von dem Regeneriergas durchströmt wird, und zwischen denen in periodischem Wechsel umgeschaltet wird.

Wie in der DE 37 32 364 A1 erläutert, ist bekannt, in einer Luftzerlegungsanlage, in welcher als Produkte Sauerstoff und/oder Stickstoff gewonnen werden, einen unreinen Stickstoffstrom, d.h. einen Stickstoffstrom, der noch gewisse Anteile an Sauerstoff enthält, aus dem Destillationssäulensystem zu entnehmen und als Regeneriergas durch den bzw. die zu regenerierenden Molekularsiebadsorber zu führen. Auch andere Gasströme können zu diesem Zweck verwendet werden.

Die Regenerierung erfolgt hierbei zumindest teilweise thermisch, d.h. das Regeneriergas wird phasenweise erwärmt, bevor es durch den bzw. die zu regenerierenden Molekularsiebadsorber geführt wird. Die Regenerierung umfasst dabei neben einer kurzen Druckabbauphase zu Beginn der Regenerierung sowie einer ebenfalls kurzen Druckaufbauphase am Ende der Regenerierung eine Heiz- und eine Kühlphase. Nur während der Heizphase wird warmes Regeneriergas benötigt. Die gesamte Regenerierung, inklusive der Heizphase, nimmt üblicherweise zwischen 30 und 60% der Dauer der Adsorptionsphase, also der Phase, in denen der oder die anderen Molekularsiebadsorber für die Entfernung der genannten Luftbestandteile zur Verfügung stehen, in Anspruch. Die Adsorptionsphase dauert typischerweise zwischen zwei und acht Stunden, beispielsweise vier Stunden.

Die Erwärmung des Regeneriergases während der Heizphase erfolgt herkömmlicherweise elektrisch. Nur während der Heizphase ist dabei Heizenergie erforderlich. Ein entsprechender Heizer ist damit nur etwa 30% der Zeit in Betrieb, muss jedoch innerhalb dieser Zeitspanne die gesamte Heizenergie bereitstellen. Die erforderliche elektrische Anschlussleistung ist daher herkömmlicherweise etwa dreimal so groß wie die mittlere benötigte Heizleistung.

Wie in der DE 10 2006 044 046 A1 angegeben, kann daher ein Wärmespeicher eingesetzt werden, der während Phasen, in denen kein warmes Regeneriergas benötigt wird, thermisch beladen wird. Das Regeneriergas wird in den Heizphasen zumindest teilweise mittels Wärme aus dem Wärmespeicher erwärmt.

Herkömmliche Erhitzer zur Erwärmung des Regeneriergases erweisen sich jedoch insbesondere hinsichtlich ihres Energieverbrauchs als unbefriedigend, weshalb die vorliegende Erfindung hier Abhilfe schaffen will.

### Offenbarung der Erfindung

Diese Aufgabe wird mittels eines Verfahrens zur Gewinnung wenigstens eines Luftprodukts und einer entsprechenden Luftbehandlungsanlage mit den Merkmalen der unabhängigen Patentansprüche gelöst. Bevorzugte Ausgestaltungen sind Gegenstand der abhängigen Patentansprüche sowie der nachfolgenden Beschreibung.

Vor der weiteren Erläuterung der Merkmale der Erfindung und der durch diese erzielbaren Vorteile werden in dieser Anmeldung verwendete Begriffe definiert.

Eine "Luftzerlegungsanlage" wird mit ggf. getrockneter und aufgereinigter Luft beschickt, die zumindest mittels eines "Hauptverdichters" in Form zumindest eines Druckluftstroms bereitgestellt wird. Eine Luftzerlegungsanlage weist, wie erwähnt, ein Destillationssäulensystem zur Zerlegung der Luft, insbesondere in Stickstoff und Sauerstoff, in einer "Zerlegungseinheit" auf. Hierzu wird die Luft in die Nähe ihres Taupunkts abgekühlt und in das Destillationssäulensystem eingeleitet, wie zuvor erläutert. Im Gegensatz hierzu umfasst eine reine "Luftverflüssigungsanlage" kein Destillationssäulensystem, also keine Zerlegungseinheit, sondern nur eine kryogene Verflüssigungseinheit. Im Übrigen kann ihr Aufbau jenem einer Luftzerlegungsanlage entsprechen. Insbesondere müssen auch in einer Luftverflüssigungsanlage der verwendeten Luft Wasser und Kohlendioxid entzogen werden. Auch Luftverflüssigungsanlagen profitieren daher, wie unten erläutert, von den im Rahmen der vorliegenden Erfindung vorgeschlagenen Maßnahmen. Selbstverständlich kann auch in einer Luftzerlegungsanlage Flüssigluft als Nebenprodukt erzeugt werden. Luftzerlegungsanlagen und Luftverflüssigungsanlagen werden nachfolgend unter dem Begriff "Luftbehandlungsanlagen" zusammengefasst. Solche Luftbehandlungsanlagen umfassen eine "kryogene Einheit", bei der es sich entweder um die Zerlegungseinheit oder um die Verflüssigungseinheit handelt.

Einer solchen Luftbehandlungsanlage wird ein "Einsatzluftstrom" zugeführt, der in dem Hauptverdichter verdichtet und dem anschließend, wie erläutert, in einem Satz von Adsorbern bzw. "Adsorbereinheiten" ("Adsorbersatz") zumindest Wasser und Kohlendioxid entzogen wird. Eine "Adsorbereinheit" ist beispielsweise in Form eines Behälters ausgebildet, in dem ein geeignetes Adsorbermaterial, beispielsweise Molekularsieb, enthalten ist, welches von dem Einsatzluftstrom (oder einem Teil hiervon) durchströmt werden kann. Ein Adsorbersatz umfasst mehrere derartiger Adsorbereinheiten, zwischen denen mittels einer geeigneten Ventilanordnung nach Bedarf umgeschaltet werden kann.

Ein "Luftprodukt" ist jedes Produkt, das zumindest durch Verdichten und Abkühlen von Luft und insbesondere, jedoch nicht notwendigerweise, durch eine anschließende Tieftemperaturrektifikation hergestellt werden kann. Insbesondere kann es sich hierbei um flüssigen oder gasförmigen Sauerstoff (LOX, GOX), flüssigen oder gasförmigen Stickstoff (LIN, GAN), flüssiges oder gasförmiges Argon (LAR, GAR), flüssiges oder gasförmiges Xenon, flüssiges oder gasförmiges Krypton, flüssiges oder gasförmiges Neon, flüssiges oder gasförmiges Helium usw. handeln, aber auch beispielsweise um Flüssigluft (LAIR). Die Begriffe "Sauerstoff", "Stickstoff" usw. bezeichnen dabei jeweils auch tiefkalte Flüssigkeiten oder Gase, die die jeweils genannte Luftkomponente in einer Menge aufweisen, die oberhalb jener atmosphärischer Luft liegt. Es muss sich also nicht um reine Flüssigkeiten oder Gase mit hohen Gehalten handeln.

Unter einer "tiefkalten" Flüssigkeit, bzw. einem entsprechenden Fluid, flüssigen Luftprodukt, Strom usw. wird ein flüssiges Medium verstanden, dessen Siedepunkt deutlich unterhalb der jeweiligen Umgebungstemperatur, beispielsweise bei 200 K oder weniger, insbesondere bei 220 K oder weniger, liegt. Beispiele für tiefkalte Medien sind flüssige Luft, flüssiger Sauerstoff und flüssiger Stickstoff im obigen Sinn.

Ein "Wärmetauscher" dient zur indirekten Übertragung von Wärme zwischen zumindest zwei z.B. im Gegenstrom zueinander geführten Strömen, beispielsweise einem warmen Druckluftstrom und einem oder mehreren kalten Strömen oder einem tiefkalten flüssigen Luftprodukt und einem oder mehreren warmen Strömen. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken. Ein Wärmetauscher, beispielsweise auch der in einer Luftbehandlungsanlage eingesetzte "Hauptwärmetauscher", der sich dadurch auszeichnet, dass durch ihn der Hauptanteil der abzukühlenden bzw. zu erwärmenden Ströme abgekühlt bzw. erwärmt wird, weist "Passagen" auf, die als voneinander getrennte Fluidkanäle mit Wärmeaustauschflächen ausgebildet sind.

Ein Wärmetauscher kann auch als "Regenerator" oder Teil eines entsprechenden Regenerators ausgebildet sein. Ein Regenerator wird zyklisch bzw. periodisch von Medien unterschiedlicher Herkunft durchströmt, die sich durch Wärmeabfuhr an bzw. Wärmeaufnahme aus einem Zwischenmedium (hier auch als "Wärmespeicher" bezeichnet) abkühlen bzw. erwärmen. Der Austausch von Wärme zwischen den Medien findet zeitlich versetzt über den Wärmespeicher statt. Bei dem Wärmespeicher handelt es sich insbesondere um einen Feststoff in Form einer regelmäßigen oder regellosen Anordnung (z.B. in Form einer Schüttung), welcher im Inneren eines Behälters im direkten Kontakt zum den strömenden Medien steht. Details zu entsprechenden Wärmespeichern werden unten noch erläutert.

Ein "Verdichter" ist eine Vorrichtung, die zum Verdichten wenigstens eines gasförmigen Stroms von wenigstens einem Eingangsdruck, bei dem dieser dem Verdichter zugeführt wird, auf wenigstens einen Enddruck, bei dem dieser dem Verdichter entnommen wird, eingerichtet ist. Ein Verdichter bildet eine bauliche Einheit, die jedoch mehrere "Verdichterstufen" in Form von Kolben-, Schrauben- und/oder Schaufelrad- bzw. Turbinenanordnungen (also Axial- oder Radialverdichterstufen) aufweisen kann. Dies gilt auch insbesondere für den "Haupt(luft)verdichter" einer Luftbehandlungsanlage (Main Air Compressor, MAC), der sich dadurch auszeichnet, dass durch diesen die gesamte oder der überwiegende Anteil der in die Luftbehandlungsanlage eingespeisten Luftmenge, also der Einsatzluftstrom, verdichtet wird. Ein "Nachverdichter", in dem typischerweise ein Teil der im Hauptverdichter verdichteten Luftmenge auf einen nochmals höheren Druck gebracht wird (Booster Air Compressor, BAC), ist häufig ebenfalls mehrstufig ausgebildet. Insbesondere werden entsprechende Verdichterstufen mittels eines gemeinsamen Antriebs, beispielsweise über eine gemeinsame Welle, angetrieben.

Eine "Entspannungsturbine" bzw. "Entspannungsmaschine", die über eine gemeinsame Welle mit weiteren Entspannungsturbinen oder Energiewandlern wie Ölbremsen, Generatoren oder Verdichtern gekoppelt sein kann, ist zur Entspannung eines gasförmigen oder zumindest teilweise flüssigen Stroms eingerichtet. Insbesondere können Entspannungsturbinen zum Einsatz in der vorliegenden Erfindung als Turboexpander ausgebildet sein. Wird ein Verdichter mit einer oder mehreren Entspannungsturbinen angetrieben, jedoch ohne extern, beispielsweise mittels eines Elektromotors, zugeführte Energie, wird der Begriff "turbinengetriebener" Verdichter oder alternativ "Booster" verwendet. Anordnungen aus turbinengetriebenen Verdichtern und Entspannungsturbinen werden auch als "Boosterturbinen" bezeichnet.

Unter einer "Wärmepumpe" wird hier eine Anordnung verstanden, in der ein flüssiges oder gasförmiges Medium (hier als "Wärmeüberträgerfluid" bezeichnet) zumindest teilweise unter Aufbringung technischer Arbeit (Antriebsenergie) erzeugte thermische Energie aufnimmt und als Nutzwärme auf ein zu beheizendes Medium überträgt. Bei einem mittels einer Wärmepumpe realisierten Prozess handelt es sich um die Umkehrung eines Wärme-Kraft-Prozesses, bei dem Wärmeenergie mit hoher Temperatur aufgenommen und teilweise in mechanische Nutzarbeit umgewandelt wird.

Eine "geschlossene" Wärmepumpe weist einen Fluidkreislauf auf, in dem zumindest ein Wärmeüberträgerfluid zyklisch zwischen zumindest zwei Druckstufen geführt wird. Hierzu wird das Wärmeüberträgerfluid, das in einem (teilweise) entspannten Zustand thermische Energie eines weiteren Fluids, hier als "Wärmeträger" bezeichnet, aufgenommen hat, mittels eines Verdichters verdichtet und erwärmt sich hierdurch weiter. Die Antriebsenergie des Verdichters wird also zumindest teilweise in Wärme umgesetzt. Die aufgenommene thermische Energie des Wärmeträgers und der Teil der Antriebsenergie, der in Wärme umgesetzt wurde, können anschließend mittels eines oder mehrerer Wärmetauscher auf das jeweils zu erwärmende Fluid übertragen werden. Das Wärmeüberträgerfluid wird anschließend in einer Entspannungsmaschine oder einem Entspannungsventil entspannt, kühlt sich entsprechend ab, und kann daher erneut die thermische Energie des verwendeten Wärmeträgers aufnehmen.

In einer "offenen" Wärmepumpe wird ebenfalls zumindest ein Wärmeüberträgerfluid verdichtet und hierdurch erwärmt, jedoch nicht zyklisch geführt. Das zumindest eine Wärmeüberträgerfluid hat damit typischerweise vor der Verdichtung keine thermische Energie aus einem Wärmeträger aufgenommen, sondern wird lediglich mittels des Verdichters verdichtet und damit erwärmt. Die Antriebsenergie des Verdichters wird also auch hier zumindest teilweise in Wärme umgesetzt und kann anschließend mittels eines oder mehrerer Wärmetauscher auf das jeweils zu erwärmende Fluid übertragen werden. Das zumindest eine verdichtete Wärmeüberträgerfluid wird anschließend jedoch nicht notwendigerweise in einer Entspannungsmaschine oder einem Entspannungsventil entspannt. Es verlässt den Bereich der Wärmepumpe und wird beispielsweise anderweitig in einer Luftbehandlungsanlage verwendet. Bei dem Wärmeüberträgerfluid kann es sich um einen Teil des Einsatzluftstroms handeln.

Flüssige und gasförmige Ströme können im hier verwendeten Sprachgebrauch reich oder arm an einer oder mehreren Komponenten sein, wobei "reich" für einen Gehalt von wenigstens 90%, 95%, 99%, 99,5%, 99,9%, 99,99% oder 99,999% und "arm" für einen Gehalt von höchstens 10%, 5%, 1%, 0,1%, 0,01% oder 0,001% auf molarer, Gewichts- oder Volumenbasis stehen kann. Flüssige und gasförmige Ströme können im hier verwendeten Sprachgebrauch ferner angereichert oder abgereichert an einer oder mehreren Komponenten sein, wobei sich diese Begriffe auf einen entsprechenden Gehalt in einem Ausgangsgemisch beziehen, aus dem der flüssige oder gasförmige Strom erhalten wurde. Der flüssige oder gasförmige Strom ist "angereichert", wenn dieser zumindest den 1,1-fachen, 1,5-fachen, 2-fachen, 5-fachen, 10-fachen 100-fachen oder 1.000-fachen Gehalt, "abgereichert", wenn er höchstens den 0,9-fachen, 0,5-fachen, 0,1-fachen, 0,01-fachen oder 0,001-fachen Gehalt einer entsprechenden Komponente, bezogen auf das Ausgangsgemisch, enthält.

Ein flüssiger oder gasförmiger Strom ist von einem anderen flüssigen oder gasförmigen Strom (auch als Ausgangsstrom bezeichnet) "abgeleitet", wenn er zumindest einige in dem Ausgangsstrom enthaltene oder aus diesem erhaltene Komponenten aufweist. Ein in diesem Sinne abgeleiteter Strom kann aus dem Ausgangsstrom durch Abtrennen oder Abzweigen eines Teilstroms oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen und dergleichen erhalten werden.

Die vorliegende Anmeldung verwendet zur Charakterisierung von Drücken und Temperaturen die Begriffe "Druckniveau" und "Temperaturniveau", wodurch zum Ausdruck gebracht werden soll, dass Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

### Vorteile der Erfindung

Die vorliegende Erfindung geht von einem Verfahren zur Gewinnung wenigstens eines Luftprodukts in einer Luftbehandlungsanlage aus, in der mittels eines Adsorbersatzes mit zumindest zwei Adsorbereinheiten im Wechselbetrieb einem Einsatzluftstrom Wasser und/oder Kohlendioxid entzogen werden. Der Einsatzluftstrom wird dabei jeweils nur durch eine Adsorbereinheit oder nur durch einen Teil der Adsorbereinheiten des Adsorbersatzes geführt. Währenddessen wird zeitweise ein erwärmtes Regeneriergas durch eine andere Adsorbereinheit oder einen anderen Teil der Adsorbereinheiten des Adsorbersatzes geführt, wie zuvor erläutert.

Bei den Zeiten, in denen das erwärmte Regeneriergas durch die entsprechenden Adsorbereinheiten geführt wird, handelt es sich um die erwähnten "Heizphasen" zum thermischen Regenerieren der Adsorber. Auch außerhalb der eigentlichen Heizphasen wird ggf. ein entsprechendes Regeneriergas durch die Adsorbereinheiten geführt, nämlich beispielsweise während der erläuterten Abkühlphasen. Das Regeneriergas wird hierbei jedoch nicht erwärmt.

Die vorliegende Erfindung kann bei sämtlichen Luftbehandlungsanlagen zum Einsatz kommen, bei denen eine Aufreinigung eines Einsatzluftstroms vorgenommen wird, wie zuvor erläutert. Neben herkömmlichen Luftzerlegungsanlagen betrifft die vorliegende Erfindung auch insbesondere reine Luftverfilüssigungsanlagen.

Wie in herkömmlichen Verfahren auch wird dabei Luft des Einsatzluftstroms stufenweise über mehrere Druckniveaus verdichtet, beispielsweise von Atmosphärendruck stromauf eines Hauptverdichters über mehrere Druckniveaus innerhalb eines mehrstufigen Hauptverdichters auf einen Hauptverdichterenddruck und anschließend teilweise über mehrere Druckniveaus innerhalb eines mehrstufigen Nachverdichters auf einen Nachverdichterenddruck.

Erfindungsgemäß ist vorgesehen, zum Erwärmen des Regeneriergases für die entsprechenden Heizphasen, jedoch nicht notwendigerweise nur während dieser, Wärme, insbesondere Verdichtungswärme, einem Teilstrom des Einsatzluftstroms zu entziehen und zur Übertragung auf das Regeneriergas bereitzustellen. Zur Bildung des Teilstroms wird Luft des Einsatzluftstroms verwendet, die stromauf und/oder stromab zumindest einer Verdichterstufe zumindest eines mehrstufigen Verdichters der Luftbehandlungsanlage von Luft des Einsatzluftstroms, die durch die zumindest eine Verdichterstufe geführt wird, abgezweigt und nach dem Entziehen der Wärme stromauf eines Destillationssäulensystems der Luftbehandlungsanlage zumindest teilweise wieder mit der nach dem Abzweigen verbliebenen Luft vereinigt wird. Die Luft des Einsatzluftstroms kann dabei vor dem Abzweigen durch die zumindest eine Verdichterstufe geführt worden sein oder danach - abzüglich der abgezweigten Luft - durch die Verdichterstufe geführt werden. Zur Bildung des Teilstroms wird also, mit anderen Worten, Luft des Einsatzluftstroms verwendet, die stromauf und/oder stromab zumindest einer Verdichterstufe zumindest eines mehrstufigen Verdichters der Luftbehandlungsanlage von durch die zumindest eine Verdichterstufe geführter oder zu führender Luft des Einsatzluftstroms abgezweigt wird. Die zur Bildung des Teilstroms verwendete Luft wird, wie erwähnt, nach dem Entziehen der Wärme zumindest teilweise wieder mit der nach dem Abzweigen verbliebenen Luft vereinigt, und zwar stromauf eines "Destillationssäulensystems" im oben erläuterten Sinn. Dies wird nachfolgend auch als "Rückspeisen" bezeichnet.

Mit anderen Worten wird der Teilstrom unter Verwendung einer Teilmenge der gesamten Luft auf einem der Druckniveaus, die stromauf und/oder stromab einer entsprechenden Verdichterstufe vorliegen, gebildet. Nach dem Abzweigen eines entsprechenden Anteils verbleibt damit eine Restluftmenge auf dem entsprechenden Druckniveau, die nicht zur Bildung des Teilstroms verwendet wird. Insbesondere hierdurch lassen sich Vorteile erzielen, da die bereitstellbare Wärmemenge exakt an den jeweiligen Bedarf angepasst werden kann.

Der "zumindest eine mehrstufige Verdichter" kann insbesondere ein mehrstufiger Haupt- und/oder ein mehrstufiger Nachverdichter der Luftbehandlungsanlage sein. Die Abzweigung "stromauf einer Verdichterstufe" umfasst dabei explizit auch eine Abzweigung stromauf einer ersten Verdichterstufe, also stromauf eines entsprechenden mehrstufigen Verdichters insgesamt. Entsprechend umfasst eine Abzweigung "stromab einer Verdichterstufe" explizit auch eine Abzweigung stromab einer letzten Verdichterstufe, also stromab eines entsprechenden mehrstufigen Verdichters insgesamt, auch beispielsweise stromab eines der letzten Verdichterstufe nachgeschalteten Adsorbersatzes. Besondere Vorteile ergeben sich jedoch durch eine Abzweigung an einer Zwischenstelle in einem entsprechenden mehrstufigen Verdichter, also stromab einer beliebigen, jedoch nicht der letzten, und stromauf einer beliebigen, jedoch nicht der ersten Verdichterstufe.

Es wird also insbesondere zum Ausdruck gebracht, dass nicht die gesamte Luftmenge auf einem entsprechenden Druckniveau stromauf bzw. stromab einer entsprechenden Verdichterstufe verwendet wird, sondern beispielsweise nur eine Teilmenge der Luft auf einem Druckniveau stromauf eines Hauptverdichters, nur eine Teilmenge der Luft auf einem Druckniveau stromab einer beliebigen Verdichterstufe des Hauptverdichters, nur eine Teilmenge der Luft auf einem Druckniveau stromab des Hauptverdichters, nur eine Teilmenge der Luft auf einem Druckniveau stromab des dem Hauptverdichter nachgeschalteten Adsorbersatzes, nur eine Teilmenge der Luft auf einem Druckniveau stromauf eines Nachverdichters, nur eine Teilmenge der Luft auf einem Druckniveau stromab einer beliebigen Verdichterstufe des Nachverdichters und/oder nur eine Teilmenge der Luft auf einem Druckniveau stromab des Nachverdichters.

Die "durch die zumindest eine Verdichterstufe geführte oder zu führende Luft des Einsatzluftstroms" muss dabei nicht die gesamte Luft des Einsatzluftstroms sein. Es handelt sich um die Luft, die von dem Einsatzluftstrom für eine entsprechende Verdichtung vorgesehen ist, beispielsweise den Teilstrom der in einem Hauptverdichter verdichteten Luft, der anschließend in einem Nachverdichter über wiederum mehrere Druckniveaus verdichtet wird.

Unter einer "Bereitstellung" von Wärme "zur Übertragung an das Regeneriergas" wird hier sowohl eine direkte Bereitstellung der Wärme, beispielsweise mittels eines Wärmetauschers, durch den das Regeneriergas und das Wärmeüberträgerfluid geführt werden, als auch eine indirekte Bereitstellung nach voriger Zwischenspeicherung in einem Regenerator verstanden. Auch eine "direkte" Bereitstellung erfolgt jedoch typischerweise mittels indirektem Wärmetausch, d.h. ohne direkten Kontakt der entsprechenden Fluide. Bei einer Zwischenspeicherung erfolgt eine Übertragung auf einen Wärmespeicher, in dem die Wärme für eine gewisse Zeit gespeichert bleibt und für eine spätere Übertragung auf das Regeneriergas bereitsteht. Insbesondere die Verwendung eines Wärmespeichers wird unten noch im Detail erläutert.

Bei der Bereitstellung der Wärme kann insbesondere eine Wärmepumpe zum Einsatz kommen, bei der es sich um eine offene oder um eine geschlossene Wärmepumpe, wie oben erläutert, handeln kann. Wird eine offene Wärmepumpe eingesetzt, kann der Teilstrom des Einsatzluftstroms selbst als Wärmeüberträgerfluid verwendet werden. Dem Teilstrom des Einsatzluftstroms kann die in ihm gespeicherte Wärme jedoch auch beispielsweise mittels Kühlwasser oder mittels eines anderen Kühlmittels entzogen werden, welches dann das Wärmeüberträgerfluid darstellt, wie unten noch erläutert. In einer geschlossenen Wärmepumpe wird die Wärme des Teilstroms des Einsatzluftstroms oder eines mittels diesem erwärmten Fluids, beispielsweise von Kühlwasser oder Kühlmittel, auf wenigstens ein Wärmeüberträgerfluid übertragen, das in einem Fluidkreislauf zyklisch zwischen zumindest zwei Druckstufen geführt wird.

Der Teilstrom des Einsatzluftstroms kann unter Verwendung von Luft des Einsatzluftstroms gebildet werden, die auf einem maximalen Druckniveau vorliegt, auf das Luft des Einsatzluftstroms in der Luftbehandlungsanlage verdichtet wird. Der Teilstrom des Einsatzluftstroms kann jedoch auch insbesondere unter Verwendung von Luft des Einsatzluftstroms gebildet werden, die auf einem Druckniveau vorliegt, das unterhalb dieses maximalen Druckniveaus liegt.

Mit anderen Worten ist im ersten Fall die zur Bildung des Teilstroms des Einsatzluftstroms verwendete Luft auf einen Maximaldruck in einer entsprechenden Luftbehandlungsanlage verdichtete Luft, im zweiten Fall liegt der Druck unterhalb des Maximaldrucks. Ein solcher Maximaldruck liegt beispielsweise stromab eines Nachverdichters in einer Luftbehandlungsanlage mit Haupt- und Nachverdichter vor. Wie nachfolgend erläutert, kann auch bei Atmosphärendruck vorliegende Luft zur Bildung des Teilstroms verwendet werden.

Das erfindungsgemäße Verfahren eignet sich jedoch in gleicher Weise für andere Betriebskonfigurationen von Luftzerlegungsanlagen, beispielsweise sogenannte High Air Pressure-Verfahren (HAP), wie unten erläutert. Auch hier kann vorgesehen sein, zur Bildung des Teilstroms des Einsatzluftstroms Luft zu verwenden, die noch nicht auf einen Maximaldruck verdichtet ist und damit stromauf des Ausgangs einer hier verwendeten Verdichteranordnung entnommen wird.

Wird der Teilstrom des Einsatzluftstroms aus einer Teilmenge von Luft des Einsatzluftstroms gebildet, die auf einem Druckniveau vorliegt, das unterhalb des maximalen Druckniveaus des entsprechenden Verdichters liegt, kann die zur Bildung des Teilstroms verwendete Luft anschließend wieder in den Verdichter eingespeist werden, so dass vorhandene Maschinen genutzt werden können. Die zur Bildung des Teilstroms verwendete Luft wird also hier nach dem Entziehen der Wärme noch in dem jeweiligen Verdichter mit der nach dem Abzweigen verbliebenen Luft vereinigt.

Die Erfindung schlägt damit, wie erläutert, anstelle einer elektrischen Aufheizung des Regeneriergases, wie aus dem Stand der Technik bekannt, die Verwendung einer Wärmepumpe vor. Diese entnimmt die zur Aufheizung des Regeneriergases erforderliche Wärme einem Prozessstrom der Luftbehandlungsanlage (dem erwähnten Teilstrom des Einsatzluftstroms), oder ggf. auch der Umgebung, und überträgt diese auf das Regeneriergas oder auf einen geeigneten Wärmespeicher, aus dem die entsprechend zwischengepufferte Wärme bei Bedarf auf das Regeneriergas übertragen werden kann.

Die Verwendung eines Wärmespeichers hat den Vorteil, dass die während der erläuterten Heizphasen benötigte Gesamtwärme ("Spitzenwärme") nicht ausschließlich aus der in diesem Moment dem Teilstrom des Einsatzluftstroms entnommenen Wärme gedeckt werden muss. Damit können die entsprechenden Wärmetauscher kleiner und kostengünstiger ausgelegt werden und es braucht weniger in Verdichtungswärme umgesetzte Verdichterleistung entzogen werden. Die Wärme kann kontinuierlich entnommen werden, so dass sich eine entsprechende Anlage mit geringeren Schwankungen betreiben lässt.

Luftbehandlungsanlagen gängiger Größe wird Einsatzluft in einer Menge von beispielsweise 500.000 Nm³/h (Normkubikmeter pro Stunde) zugeführt und verdichtet. Die Menge an Regeneriergas beträgt in einer derartigen Anlage typischerweise ca. 100.000 Nm³/h und wird während eines Drittels der Betriebszeit der Luftbehandlungsanlage (nämlich nur während der erwähnten Heizphasen) warm benötigt. Im zeitlichen Mittel ergibt sich hierdurch ein Wärmebedarf von ca. 2 MW, der in herkömmlichen Anlagen elektrisch gedeckt wird. Die erfindungsgemäße Lösung erweist sich in diesem Zusammenhang als energetisch deutlich günstiger:

Eine vorteilhafterweise eingesetzte geschlossene Wärmepumpe kann beispielsweise mit Stickstoff als Wärmeüberträgerfluid betrieben werden. Es wird beispielsweise Kühlwasser, das einen Teilstrom des Einsatzluftstroms kühlt, oder der Teilstrom direkt, von 40 °C auf 5 °C abgekühlt und die hierdurch gewonnene Wärme verwendet, um beispielsweise einen Feststoffspeicher kontinuierlich auf 180 °C zu erwärmen. Die gespeicherte Wärme wird während der Heizphasen der Regenerierung durch das Regeneriergas abgerufen. Der Massenstrom im Wärmepumpenkreislauf beträgt dabei typischerweise 5 bis 15% der verdichteten Gesamtluftmenge. Etwa 10 bis 30% der Gesamtluftmenge werden an Regeneriergas benötigt.

Werden in einer derartigen Wärmepumpe eine Entspannungsmaschine und ein Verdichter verwendet, die auf einer gemeinsamen Welle angebracht sind (sogenannter Kompander, auch in offenen Wärmepumpen einsetzbar) und für eine Verdichtung und anschließende Entspannung eines Wärmeüberträgerfluids (z.B. des verdichteten Teilstroms selbst) eingesetzt, so wird hierfür eine Motorleistung von nur 0,91 MW benötigt. Diese ergibt sich aus einer erforderlichen Verdichterleistung von 1,79 MWmech (mechanische Leistung) und der in der Entspannungsmaschine freiwerdenden Leistung von 0,88 MWmech. Die erforderliche Motorleistung liegt damit um mehr als ein Megawatt niedriger als die vergleichbare Leistung einer elektrischen Heizung (siehe oben). Der Ansaugdruck des Verdichters der Wärmepumpe ist dabei auf kein bestimmtes Druckniveau festgelegt.

Der Teilstrom des Einsatzluftstroms, dem die Wärme entzogen wird, welche dann mittels der Wärmepumpe zur Übertragung auf das Regeneriergas bereitgestellt wird, kann an unterschiedlichen Stellen in der Luftbehandlungsanlage dem Einsatzluftstrom entnommen werden, so dass das Verfahren bei einer Vielzahl von Bauformen entsprechender Luftbehandlungsanlagen zum Einsatz kommen kann. Mit anderen Worten kann das Druckniveau, auf dem ein entsprechender Teilstrom abgezweigt wird, entweder Atmosphärendruck oder einem überatmosphärischen Druckniveau entsprechen. Liegt die zum Bilden des Teilstroms verwendete Luft bei Atmosphärendruck vor, wird diese verdichtet, anderenfalls kann eine entsprechende Verdichtung fakultativ eingesetzt werden, um den entsprechenden Teilstrom mit Verdichtungswärme zu beaufschlagen.

Es sind Verfahren bekannt, bei denen die Abwärme des gesamten, durch den Nachverdichter verdichteten Luftstroms einer Luftzerlegungsanlage mit sogenannter Innenverdichtung genutzt wird (vgl. Springmann, H., Wege zur Energieeinsparung in der Luftzerlegungstechnologie, CPI Symposium, Salzburg, 1981).

Nochmals sei betont, dass die vorliegende Erfindung im Gegensatz hierzu einen Teilstrom des Einsatzluftstroms verwendet, der erfindungsgemäß nur aus einer Teilmenge der Luft auf dem jeweiligen Druckniveau bzw. stromauf und stromab einer entsprechenden Verdichterstufe gebildet wird. Diese Luft kann dabei auch auf einem Druckniveau vorliegen, das unterhalb eines maximalen Druckniveaus liegt, auf das Luft des Einsatzluftstroms in der Luftbehandlungsanlage verdichtet wird. Die Erfindung sieht also weder vor, notwendigerweise nur die auf einen Maximaldruck stromab eines Nachverdichters verdichtete Luft einzusetzen, noch eine Gesamtmenge entsprechender Luft zu verwenden. Dies hat folgende Vorteile:

Bei einer Luftzerlegungsanlage mit Innenverdichtung wird dem Destillationssäulensystem ein flüssiger Strom entnommen und zumindest zum Teil flüssig auf Druck gebracht. Der flüssig auf Druck gebrachte Strom wird in einem Hauptwärmetauscher der Luftzerlegungsanlage gegen einen Wärmeträger erwärmt und verdampft. Bei dem flüssigen Strom kann es sich insbesondere um flüssigen Sauerstoff, jedoch auch um Stickstoff oder Argon handeln. Die Innenverdichtung wird damit zur Gewinnung entsprechender gasförmiger Druckprodukte eingesetzt.

Der Begriff "Verdampfen" schließt bei der Innenverdichtung Fälle ein, bei denen ein überkritischer Druck herrscht und daher kein Phasenübergang im eigentlichen Sinne stattfindet. Der flüssig auf Druck gebrachte Strom wird dann "pseudoverdampft". Gegen einen entsprechenden (pseudo-)verdampfenden Strom wird ein Wärmeträger verflüssigt (bzw. pseudoverflüssigt, wenn er unter überkritischem Druck steht). Der Wärmeträger wird dabei üblicherweise durch einen Teil der der Luftzerlegungsanlage zugeführten Luft gebildet.

Um den flüssig auf Druck gebrachten Strom erwärmen und verdampfen zu können, muss diese Luft aus thermodynamischen Gründen einen höheren Druck als der flüssig auf Druck gebrachte Strom haben. Herkömmlicherweise wird hierbei ein Teil der der Luftzerlegungsanlage zugeführten und in einem Hauptverdichter (Main Air Compressor, MAC) verdichteten Luft in einem Nachverdichter (BAC) auf den benötigten Druck nachverdichtet. Entsprechende Verfahren werden auch als MAC/BAC-Verfahren bezeichnet.

Der Luftstrom durch den Nachverdichter wird damit über den Abgabedruck des innenverdichteten Produkts, z.B. Sauerstoff, festgelegt. Dieser Luftstrom kann sich dabei auch deutlich von der benötigten Regeneriergasmenge unterscheiden und ist tendenziell eher größer als diese. Dies hat einen deutlichen Überschuss an Verdichtungswärme zur Folge, was wiederum einer Reduktion des energetischen Einsparungspotentials gleichkommt. Die zuvor erläuterte Spitzenwärme wird hier permanent bereitgestellt, aber nur periodisch während der Heizphase genutzt. Auch steht in entsprechenden Anlagen damit kein kaltes Regeneriergas für die erläuterten Kühlphasen zur Verfügung.

Weil der zur Bereitstellung der Wärme verwendete Teilstrom des Einsatzluftstroms erfindungsgemäß nur aus einer Teilmenge der Luft auf einem entsprechenden Druckniveau gebildet wird, wobei es sich auch um ein Druckniveau unterhalb eines maximalen Druckniveaus, auf das Luft in der Luftbehandlungsanlage verdichtet wird, handeln kann, kann erfindungsgemäß eine gezielte Anpassung an den Wärmebedarf vorgenommen werden. Dies ist insbesondere aufgrund der zuvor erläuterten Rückspeisung möglich, durch die sich die in ein Destilliationssäulensystem eingespeiste Luftmenge und deren Druck und Temperatur auch bei einer Änderung der abgezweigten Luftmenge und/oder deren weiterer Behandlung nicht ändert. Es kann also im Gegensatz zum Stand der Technik je nach Wärmebedarf eine variable Teilmenge der Einsatzluft unabhängig von der Gesamtluftmenge, die beispielsweise in einem Nachverdichter verdichtet wird, eingesetzt und entsprechend behandelt werden.

Das Bilden des Teilstroms des Einsatzluftstroms umfasst ferner vorteilhafterweise das Verdichten der zur Bildung des Einsatzluftstroms verwendeten Luft, wie bereits zuvor erwähnt. Der Teilstrom wird also vorteilhafterweise weiter verdichtet.

In einer vorteilhaften Ausgestaltung des erfindungsgemäßen Verfahrens wird, wenn der Einsatzluftstrom stromauf des Adsorbersatzes mittels eines mehrstufigen Hauptverdichters verdichtet wird, der Teilstrom durch Entnehmen (also Abzweigen) von Luft des Einsatzluftstroms stromauf oder stromab des Hauptverdichters oder zwischen Verdichterstufen des Hauptverdichters gebildet. Diese Verfahrensvariante kann insbesondere in Luftbehandlungsanlagen ohne Nachverdichter zum Einsatz kommen. Auch stromab des Adsorbersatzes kann eine Entnahme erfolgen.

Ein entsprechender Teilstrom kann, wie unten angegeben, auf ein höheres Druckniveau gebracht und anschließend nach dem Entziehen der Wärme stromab des Hauptverdichters oder zwischen zwei Verdichterstufen des Hauptverdichters mit der nach der Entnahme verbliebenen Luft des Einsatzluftstroms vereinigt ("rückgespeist") werden. Zuvor wird ggf. Kondensat abgeschieden. Der Einsatzluftstrom wird damit anschließend insgesamt dem Adsorbersatz zugeführt. Die Luftmenge insgesamt ändert sich damit nicht, was es ermöglicht, das Verfahren ohne umfangreichere Anpassungen auch in bestehenden Luftbehandlungsanlagen zu implementieren.

Eine besonders vorteilhafte Verfahrensvariante sieht vor, einen mehrstufigen Hauptverdichter einzusetzen und den Einsatzluftstrom stromab zumindest zweier, ausgehend von einem Verdichtereingang in Strömungsrichtung nacheinander geschalteter, Verdichterstufen abzuzweigen. Die Abzweigung erfolgt also nach der zweiten, dritten, vierten usw. Verdichterstufe. Vorteilhafterweise erfolgt die Abzweigung hier stromauf eines Nachkühlers, so dass ein entsprechender Teilstrom noch die gesamte Verdichtungswärme aufweist. In diesem Fall kann auf eine Nachverdichtung verzichtet werden, so dass eine entsprechende Anlage in ihrer Erstellung und im Betrieb einfacher und kostengünstiger ist.

Insgesamt erlaubt ein Bilden des Teilstroms durch Abzweigung von Luft des Einsatzluftstroms stromauf oder stromab des Hauptverdichters oder zwischen Verdichterstufen des Hauptverdichters eine deutlich bessere Ausnutzung des energetischen Einsparungspotentials durch die Möglichkeit einer Anpassung der Luftmenge des Teilstroms an den Wärmebedarf, der durch die erforderliche Temperatur und Menge des Regeneriergases definiert ist. Insbesondere durch den Einsatz eines Wärmespeichers, wie noch erläutert, kann die erforderliche Baugröße der zusätzlichen Verdichterstufe, falls verwendet, erheblich reduziert werden.

Wird eine zusätzliche Verdichterstufe zum Verdichten des Teilstroms eingesetzt, ergibt sich eine Verbesserung ihrer Betreibbarkeit durch die Rückspeisung des Teilstroms vor einem Zwischen- bzw. Nachkühler des Hauptverdichters. Die zusätzliche Verdichterstufe kann in einem derartigen Fall permanent laufen, ungeachtet dessen, ob die Wärme des Teilstroms genutzt oder nur in dem Zwischen- bzw. Nachkühler abgeführt wird. Der Betrieb der nachgeschalteten Verdichterstufen ändert sich nicht.

In Luftbehandlungsanlagen, in denen ein Teil des Einsatzluftstroms stromab des Adsorbersatzes mittels eines mehrstufigen Nachverdichters nachverdichtet wird, kann der Teilstrom auch durch Abzweigung von Luft dieses Anteils stromauf oder stromab des Nachverdichters oder zwischen Verdichterstufen des Nachverdichters gebildet werden. Dies hat den Vorteil, dass es sich hierbei schon um entsprechend aufgereinigte Luft handelt, d.h. um Luft, der zumindest schon Wasser und Kohlendioxid entzogen wurde, und die daher ohne weiteres auch in eine kryogene Einheit der Luftbehandlungsanlage eingespeist werden kann.

Auch diese Luft kann, nach dem Entziehen der Wärme, stromab des Nachverdichters oder zwischen zwei Verdichterstufen des Nachverdichters mit nach dem Entnehmen verbliebener Luft des entsprechenden Anteils des Einsatzluftstroms vereinigt werden. Die entsprechende Luftmenge stromab des Nachverdichters bleibt damit ebenfalls gleich, so dass das Verfahren auch hier ohne umfangreichere Anpassungen auch in bestehenden Luftbehandlungsanlagen implementiert werden kann.

In jedem Fall wird ein entsprechender Teilstrom, wenn er zwischen zwei Verdichterstufen des Haupt- oder Nachverdichters abgezweigt wird, wie erwähnt, vorteilhafterweise noch stromauf eines zwischen den zwei Verdichterstufen ggf. angeordneten Nachkühlers abgezweigt.

In einer als Luftzerlegungsanlage ausgebildeten Luftbehandlungsanlage mit einem Destillationssäulensystem kann der Teilstrom nach dem Entziehen der Wärme auch in das Destillationssäulensystem eingespeist werden. Beispielsweise kann ein entsprechender Teilstrom in eine Mittel- oder Niederdrucksäule entspannt werden und dadurch zusätzliche Kälte liefern, wenn er auf einem entsprechenden Druckniveau vorliegt. Zuvor kann eine Abkühlung in einem Hauptwärmetauscher, eine Entspannung in einer Entspannungsturbine oder einem Entspannungsventil, oder eine Vereinigung mit weiteren Strömen erfolgen.

Die genannten Möglichkeiten zur Vereinigung mit der verbliebenen Luft bzw. zur Einspeisung in das Destillationssäulensystem können insbesondere auch miteinander kombiniert und je nach Bedarf angepasst werden.

In allen Fällen erweist es sich als günstig, wenn der Teilstrom nach der Abzweigung von einem ersten auf ein zweites Druckniveau verdichtet wird. Stromauf des Hauptverdichters liegt das erste Druckniveau bei Atmosphärendruck, an beliebigen Stellen stromab hiervon bei einem überatmosphärischen Druck vor.

Das erfindungsgemäße Verfahren kann in unterschiedlichen Varianten betrieben werden, wobei der als Wärmeträger verwendete Teilstrom des Einsatzluftstroms, wie erwähnt, stromab der Wärmepumpe erwärmt, verdichtet und/oder entspannt und/oder auch in die Luftbehandlungsanlage zurückgespeist werden kann.

Die erfindungsgemäß vorgeschlagene Lösung erweist sich insbesondere deshalb als besonders vorteilhaft, weil ein entsprechend von dem Einsatzluftstrom abgezweigter Teilstrom des Einsatzluftstroms unabhängig vom verbleibenden Rest des Einsatzluftstroms behandelt, d.h. nachverdichtet, gekühlt, entspannt usw. werden kann. Daher kann die für die Erwärmung des Regeneriergasstroms zur Verfügung stehende Wärmemenge unabhängig von der durch den Rest des Einsatzluftstroms bereitstellbaren Wärmemenge eingestellt werden. Durch die Möglichkeit, einen entsprechenden Teilstrom rückzuspeisen, d.h. erneut mit dem Einsatzluftstrom zu vereinigen, können nachgeschaltete Einrichtungen, beispielsweise Wärmetauscher, Destillationssäulen, Verdichter, Entspannungsmaschinen und dergleichen, unverändert weiterbetrieben werden. Diese können dieselbe Luftmenge mit derselben Temperatur und demselben Druck erhalten wie ohne eine Regeneriergaserwärmung. Die Implementierung der erfindungsgemäßen Maßnahmen erfordert daher keine weitere Modifikation einer entsprechenden Anlage, so dass auch bestehende Anlagen nachgerüstet werden können.

Die erfindungsgemäßen Maßnahmen können insbesondere auch nur zeitweise zum Einsatz kommen. So kann der Teilstrom auch nur in den Zeiträumen gebildet werden, in denen ein erwärmter Regeneriergasstrom benötigt wird.

Varianten des erfindungsgemäßen Verfahrens sind insbesondere:
- Abzweigung des Teilstroms stromauf des Hauptverdichters, Verdichten, Entziehen der Wärme und Rückspeisen zwischen zwei Verdichterstufen des Hauptverdichters oder stromab des Hauptverdichters, vorzugsweise stromauf eines Zwischen- oder Nachkühlers und stromauf des Adsorbersatzes abhängig vom Druckniveau,
- Abzweigung des Teilstroms zwischen zwei Verdichterstufen des Hauptverdichters, weiteres Verdichten, Entziehen der Wärme, ggf. Abscheiden von Kondensat und Rückspeisen stromab des Hauptverdichters, vorzugsweise stromauf eines Nachkühlers und stromauf des Adsorbersatzes,
- Abzweigung des Teilstroms stromab des Adsorbersatzes, weiteres Verdichten, Entziehen der Wärme und Rückspeisen stromauf des Hauptwärmetauschers,
- Abzweigung des Teilstroms stromab des Adsorbersatzes, weiteres Verdichten, Entziehen der Wärme und Rückspeisen bei einer Zwischentemperatur des Hauptwärmetauschers,
- Abzweigung des Teilstroms stromab des Adsorbersatzes, weiteres Verdichten, Entziehen der Wärme und Rückspeisen zwischen zwei Verdichterstufen des Nachverdichters, vorzugsweise stromauf eines Zwischen- oder Nachkühlers, insbesondere stromab der ersten Verdichterstufe, und
- Abzweigung des Teilstroms zwischen zwei Verdichterstufen des Nachverdichters, weiteres Verdichten, Entziehen der Wärme und Rückspeisen stromab des Nachverdichters, vorzugsweise stromauf eines Nachkühlers.

Eine dieser Varianten kann beispielsweise die Verwendung einer offenen Wärmepumpe umfassen, wie bereits oben erläutert. Hierbei erfolgt die Abzweigung des Teilstroms stromab einer Verdichterstufe des Haupt- und/oder Nachverdichters und stromauf des jeweiligen Zwischen- bzw. Nachkühlers. Alternativ dazu kann eine Abzweigung des Teilstroms stromauf der ersten Verdichterstufe des Haupt- und/oder Nachverdichters erfolgen. Durch eine weitere Verdichterstufe wird der Teilstrom verdichtet und damit auf ein höheres Temperaturniveau gebracht. Diese Wärme wird nun auf das Regeneriergas, ein fluides Sekundärmedium (Wärmeüberträgerfluid, beispielsweise Kühlwasser oder ein Kühlmittel), das Wärmeüberträgerfluid einer Wärmepumpe oder einen Wärmespeicher übertragen. Danach wird der Teilstrom stromab der Entnahmestelle und vorzugsweise stromauf eines vorhandenen Zwischen- bzw. Nachkühlers zurückgespeist. Optional kann die Wärme auch mehrfach entnommen und übertragen werden, beispielsweise zunächst wie soeben erläutert und stromab hierzu mittels eines weiteren Erhitzers (hier auch als Spitzenerhitzer bezeichnet) auf das Regeneriergas durch den warmen Teilstrom, das Sekundärmedium (Wärmeüberträgerfluid) bzw. den Wärmespeicher. Dies kann insbesondere während der Heizphasen vorteilhaft sein.

Eine Variante beim Betrieb eines derartigen Spitzenerhitzers kann umfassen, einen entsprechenden Teilstrom stromab einer Verdichterstufe des Haupt- und/oder Nachverdichters und stromauf des jeweiligen Zwischen- bzw. Nachkühlers abzuzweigen. Anschließend kann optional eine geringfügige Druckerhöhung des Regeneriergases durch ein Gebläse erfolgen. Wie oben wird die Wärme des Teilstroms auf das Regeneriergas, ein Sekundärmedium (Wärmeüberträgerfluid, beispielsweise Kühlwasser oder ein Kühlmittel), das Wärmeüberträgerfluid einer Wärmepumpe oder einen Wärmespeicher übertragen. Danach wird auch hier der Teilstrom stromab der Entnahmestelle und vorzugsweise stromauf eines vorhandenen Zwischen- bzw. Nachkühlers zurückgespeist.

Der Betrieb einer geschlossenen Wärmepumpe kann beispielsweise umfassen, den Teilstrom an einer Stelle abzuzweigen, an der dieser eine Temperatur oberhalb der Umgebungstemperatur besitzt. Durch eine weitere Verdichterstufe wird der Teilstrom verdichtet und damit auf ein höheres Temperaturniveau gebracht. Wie oben wird die Wärme des Teilstroms auf, ein Sekundärmedium (Wärmeüberträgerfluid, beispielsweise Kühlwasser oder ein Kühlmittel) und letztlich das Wärmeüberträgerfluid einer Wärmepumpe übertragen. Die Wärmepumpe führt die Wärme an das kalte Regeneriergas oder an einen Wärmespeicher ab. Optional kann auch hier ein Spitzenerhitzer stromab der Erwärmung des Regeneriergases durch die Wärmepumpe bzw. den Wärmespeicher eingesetzt werden. Die Wärmepumpe kann, wie erwähnt, mittels wenigstens eines Kompanders oder wenigstens eines Drosselventils und wenigstens eines Verdichters betrieben werden.

Eine besonders vorteilhafte Ausführungsform kann umfassen, den Fluidkreislauf der Wärmepumpe selbst so auszuführen, dass dieser als Wärmespeicher fungiert (z.B. unter Verwendung von Thermoöl oder Druckwasser als Wärmeüberträgerfluid und gleichzeitig als Speichermedium). Bei Nutzung des Fluidkreislaufs als Wärmespeicher erfolgt vorteilhafterweise der Einsatz eines geeigneten Speichertanks zur Lagerung des warmen Speichermediums bzw. Wärmeüberträgerfluids.

Auch die in herkömmlichen Anlagen vorgesehene Aufladung eines Wärmespeichers kann im Rahmen der vorliegenden Erfindung entsprechend eingesetzt werden. Hierzu wird während der Regenerierung beispielsweise ein Drittel der Wärmemenge mittels der Wärmepumpe direkt an das Regeneriergas übertragen, die verbleibenden zwei Drittel des Wärmebedarfs werden aus dem Wärmespeicher gedeckt. Wird kein warmes Regeneriergas benötigt, wird die gesamte Wärmemenge in den Wärmespeicher übertragen (eingespeichert), der hierzu entsprechend ausgelegt ist.

Mittels der Wärmepumpe kann damit dem als Wärmeträger verwendeten Teilstrom des Einsatzluftstroms kontinuierlich Wärme entzogen, auf eine höhere Temperatur transformiert und in dem Wärmespeicher gespeichert werden. Dies ermöglicht einen Betrieb einer entsprechenden Wärmepumpe ohne Aufheizzeiten und/oder Schwankungen. Dies gilt auch bezüglich des als Wärmeträger verwendeten Teilstroms des Einsatzluftstroms, der mittels der Wärmepumpe kontinuierlich gekühlt wird.

Die in dem Wärmespeicher verwendbaren Wärmespeichermedien richten sich nach der Konfiguration der verwendeten Luftbehandlungsanlage, insbesondere der lieferbaren Wärmemenge, den jeweils vorliegenden Temperaturen und dem in der Wärmepumpe verwendeten Wärmeüberträgerfluid.

Wärmespeicher, die sich zum Einsatz im Rahmen der vorliegenden Erfindung eignen, sind insbesondere Feststoffwärmespeicher, wie sie in der Fachliteratur beschrieben sind (siehe beispielsweise i. Dinçer und M.A. Rosen, Thermal Energy Storage: Systems and Applications, Chichester: John Wiley & Sons, 2002). Als Speichermedien eignen sich dabei beispielsweise Gestein, Beton, Ziegel, künstlich hergestellte Keramiken oder Gusseisen. Für niedrigere Speichertemperaturen eignen sich ferner Erde, Kies, Sand oder Schotter. Weitere Speichermedien wie Thermoöle oder Salzschmelzen sind beispielsweise aus dem Gebiet der Solartechnik bekannt.

In entsprechenden Wärmespeichern kann es sich als besonders vorteilhaft erweisen, das Speichermedium in einem Isolierbehälter bereitzustellen, was eine verlustfreie oder nahezu verlustfreie Wärmespeicherung ermöglicht.

Die Erfindung kann mit unterschiedlichen Wärmeüberträgerfluiden in einer geschlossenen Wärmepumpe betrieben werden. Ein Fluidkreislauf kann zumindest Stickstoff, Luft und/oder wenigstens ein Edelgas als Wärmeüberträgerfluid enthalten. Der Fachmann wählt die Wärmeüberträgerfluide nach der Wärmeaufnahmekapazität und der bereitstellbaren Wärmeleistung aus. Besonders günstig ist es, wenn die Luftbehandlungsanlage das Wärmeüberträgerfluid selbst herstellen kann.

Besonders vorteilhaft ist, wie erläutert, eine Wärmepumpe, die eine Entspannungsmaschine und einen mechanisch mit der Entspannungsmaschine gekoppelten Verdichter, also einen Kompander, aufweist. Durch einen solchen Kompander lässt sich eine Wärmepumpe besonders energieeffizient betreiben.

Die in der Wärmepumpe geführten Ströme können gleichsinnig oder im Gegenstrom zueinander geführt werden. Wird entlang einer Strömungsrichtung eine schlechte Wärmeleistung erzielt, kann beispielsweise eine Segmentierung des Füllmaterials vorgenommen werden. Der verwendete Wärmespeicher wird vorzugsweise im Hinblick auf eine hohe Wärmekapazität ausgewählt.

Eine erfindungsgemäß ebenfalls vorgeschlagene Luftbehandlungsanlage weist wenigstens einen Adsorbersatz mit zumindest zwei Adsorbereinheiten auf, die dafür eingerichtet sind, einem Einsatzluftstrom zumindest Wasser und/oder Kohlendioxid zu entziehen, und Mittel, die dafür eingerichtet sind, den Einsatzluftstrom jeweils nur durch eine oder jeweils nur durch einen Teil der Adsorbereinheiten zu führen und währenddessen zeitweise ein erwärmtes Regeneriergas durch eine andere oder durch einen anderen Teil der Adsorbereinheiten zu führen. Erfindungsgemäß sind ferner Mittel vorgesehen, die dafür eingerichtet sind, zum Erwärmen des Regeneriergases einem Teilstrom des Einsatzluftstroms Wärme zu entziehen und zur Übertragung auf das Regeneriergas bereitzustellen, sowie Mittel, die dafür eingerichtet sind, den Teilstrom zumindest teilweise aus Luft des Einsatzluftstroms zu bilden, die stromauf und/oder stromab zumindest einer Verdichterstufe zumindest eines mehrstufigen Verdichters der Luftbehandlungsanlage von durch die zumindest eine Verdichterstufe geführter oder zu führender Luft des Einsatzluftstroms abgezweigt und stromauf eines Destillationssäulensystems zumindest teilweise wieder mit der nach dem Abzweigen verbliebenen Luft vereinigt wird.

Eine derartige Luftbehandlungsanlage ist insbesondere zur Durchführung eines erfindungsgemäßen Verfahrens eingerichtet.

Die Erfindung wird anhand der beigefügten Zeichnungen näher erläutert, in denen Ausführungsformen der Erfindung gegenüber dem Stand der Technik gezeigt sind.

### Kurze Beschreibung der Zeichnungen

Figur 1 zeigt eine Luftzerlegungsanlage in Form eines schematischen Anlagendiagramms.
Figur 2 zeigt eine Wärmepumpe gemäß einer Ausführungsform der Erfindung in schematischer Darstellung.
Figur 3 zeigt Details einer Luftzerlegungsanlage gemäß einer Ausführungsform der Erfindung in schematischer Darstellung.
Figur 4 zeigt Details einer Luftzerlegungsanlage gemäß einer Ausführungsform der Erfindung in schematischer Darstellung.
Figur 5 zeigt Details einer Luftzerlegungsanlage gemäß einer Ausführungsform der Erfindung in schematischer Darstellung.
Figur 6 zeigt Details einer Luftzerlegungsanlage gemäß einer Ausführungsform der Erfindung in schematischer Darstellung.

### Ausführungsformen der Erfindung

In den Figuren sind einander entsprechende Elemente mit identischen Bezugszeichen angegeben. Auf eine wiederholte Erläuterung wird verzichtet.

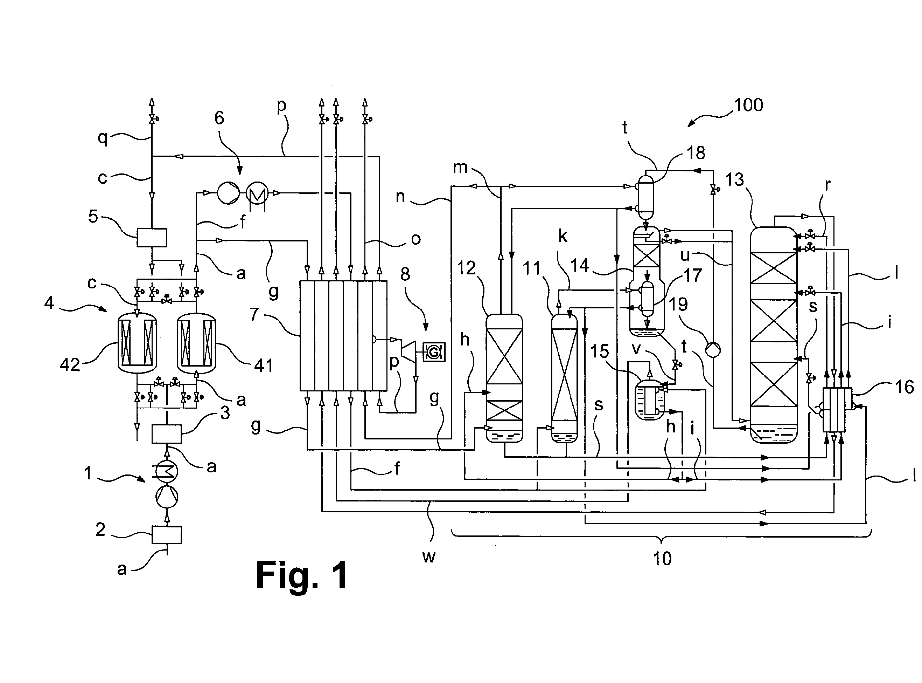

In Figur 1 ist eine Luftzerlegungsanlage in Form eines schematischen Anlagendiagramms dargestellt und insgesamt mit 100 bezeichnet.

Die Luftzerlegungsanlage 100 weist einen Hauptverdichter 1 auf, der über einen Filter 2 einen Einsatzluftstrom a ansaugt. Der Einsatzluftstrom a wird mittels des Hauptverdichters 1, der insbesondere mehrere Verdichterstufen mit Zwischen- und Nachkühlung aufweisen kann, verdichtet. In der Figur 1 ist der Hauptverdichter 1 vereinfacht mit nur einer Verdichterstufe und einem Nachkühler gezeigt.

Ein entsprechend verdichteter Einsatzluftstrom, weiter mit a bezeichnet, wird einer Vorkühleinrichtung 3 zugeführt und in dieser, beispielsweise mittels Kühlwasser, auf eine geeignete Temperatur abgekühlt.

Zur Entfernung störender Komponenten, insbesondere von Wasser und Kohlendioxid, ist ein Adsorbersatz 4 vorgesehen, der im dargestellten Beispiel 2 Adsorbereinheiten 41 und 42 aufweist. Mittels entsprechend geschalteter Ventilanordnungen (ohne Bezeichnung) wird der verdichtete Einsatzluftstrom, der hier weiterhin mit a bezeichnet wird, durch die Adsorbereinheit 41 geführt. Es versteht sich, dass ein entsprechender Adsorbersatz 4 auch mehr als zwei Adsorbereinheiten umfassen kann. In einem derartigen Fall kann ein entsprechender Druckluftstrom durch eine beliebige Adsorbereinheit und/oder durch einen Teil der Adsorbereinheiten geführt werden.

Im hier dargestellten Beispiel wird ein Regeneriergasstrom c durch die andere Adsorbereinheit 42 geleitet. Das als Regeneriergasstrom c bereitgestellte Regeneriergas wird hierbei während der zuvor erläuterten Heizphasen, im dargestellten Zeitpunkt beispielsweise zur Regeneration der Adsorbereinheit 42, mittels einer Heizeinrichtung 5 aufgeheizt.

Der weitgehend von Wasser und Kohlendioxid befreite Einsatzluftstrom, weiter mit a bezeichnet, wird in zwei Teilströme f und g aufgeteilt. Die in der Figur 1 dargestellte Luftzerlegungsanlage 100 arbeitet unter Verwendung einer Kombination aus Haupt- und Nachverdichter (MAC/BAC). Das erfindungsgemäße Verfahren eignet sich jedoch in gleicher Weise für andere Betriebskonfigurationen von Luftzerlegungsanlagen, beispielsweise sogenannte High Air Pressure-Verfahren (HAP).

Im dargestellten Beispiel wird der Teilstrom f durch einen Nachverdichter 6 geführt, der, wie der Hauptverdichter 1, mehrere Verdichterstufen mit Zwischen- und Nachkühlung umfassen kann. Auch hier ist lediglich eine Verdichterstufe mit einem Nachkühler gezeigt. Der Teilstrom g wird hingegen keinen weiteren druckbeeinflussenden Maßnahmen unterworfen.

Die Teilströme f und g werden anschließend einem Hauptwärmetauscher 7 der Luftzerlegungsanlage 100 zugeführt und durchlaufen diesen von seinem kalten zu seinem warmen Ende. Der Teilstrom g liegt stromab des kalten Endes des Hauptwärmetauschers 7 im Wesentlichen noch bei dem Druck vor, auf den dieser in dem Hauptverdichter 1 verdichtet wurde, typischerweise bei ca. 3,1 bar. Der Teilstrom f wurde hingegen in dem Nachverdichter 6 auf einen höheren Druck, typischerweise ca. 4,8 bar, verdichtet.

Der Teilstrom f wird zu einem Teil gasförmig in eine Hochdrucksäule 11 eines Destillationssäulensystems 10 der Luftzerlegungsanlage 100 eingespeist. Das Destillationssäulensystem 10 der Luftzerlegungsanlage 100 ist im dargestellten Beispiel als Dreisäulensystem mit einer Hochdrucksäule 11, einer Mitteldrucksäule 12 und einer (zweigeteilten) Niederdrucksäule 13 und 14 ausgebildet. Es umfasst ferner einen Kondensator 15.

Der Einsatz der vorliegenden Erfindung ist jedoch nicht auf das dargestellte Beispiel beschränkt, diese ist beispielsweise auch in Destillationssäulensystemen mit zwei Säulen (beispielsweise einer klassischen Linde-Doppelsäule) einsetzbar.

Der nicht in die Hochdrucksäule 11 eingespeiste Anteil des Teilstroms f wird durch die Verflüssigungspassagen des Kondensators 15, der als Badkondensator ausgebildet ist, verflüssigt. Ein Teilstrom der erhaltenen Flüssigkeit, hier mit h bezeichnet, wird in die Mitteldrucksäule 12 überführt, in die auch der zuvor erläuterte Teilstrom g gasförmig eingeleitet wird. Ein zweiter Teilstrom i der in dem Kondensator 15 erhaltenen Flüssigkeit wird durch einen Unterkühler 16 geführt und in den Säulenteil 13 der zweigeteilten Niederdrucksäule, die aus den Säulenteilen 13 und 14 besteht, eingespeist.

Ein stickstoffangereichertes Kopfgas k vom Kopf der Hochdrucksäule 11 wird in einem Fallfilmverdampfer 17, der innerhalb des zweiten Säulenteils 14 der zeigeteilten Hochdrucksäule angeordnet ist, verflüssigt, und zum Teil als Rücklauf auf die Hochdrucksäule 11 aufgegeben (ohne Bezeichnung). Ein weiterer Anteil des verflüssigten Kopfgases k wird als Strom I ebenfalls durch den Unterkühler 16 geführt und in den ersten Säulenteil 13 der zweigeteilten Niederdrucksäule eingespeist.

Ein Kopfgas m vom Kopf der Mitteldrucksäule 12 wird zu einem Teil (Strom n) zum kalten Ende des Hauptwärmetauschers 7 geführt und durchläuft diesen zu wiederum einem Teil (Strom o) zu dessen warmem Ende. Der Strom o kann aus der Luftzerlegungsanlage 100 als Stickstoffdruckprodukt (PGAN) ausgeleitet werden. Der verbleibende Anteil des Stroms n wird im dargestellten Beispiel mittels einer generatorgekoppelten Entspannungsturbine 8 entspannt, wodurch ein Teil der für den Betrieb der Luftzerlegungsanlage 100 erforderlichen Kälte erzeugt werden kann. Der entsprechend entspannte Strom, hier mit p bezeichnet, wird erneut vom kalten Ende zum warmen Ende durch den Hauptwärmetauscher 7 geführt und hierdurch auf Umgebungstemperatur angewärmt.

Ein Teil hiervon (Strom q) kann aus der Luftzerlegungsanlage 100 ausgeleitet werden. Ein weiterer Anteil wird als Regeneriergas entsprechend dem zuvor erläuterten Strom c verwendet. Das Regeneriergas des Stroms c kann, wie erwähnt, in einer Heizeinrichtung 5 während Heizphasen zur Regenerierung der Adsorbereinheiten 41 und 42 des Adsorbersatzes 4 erwärmt werden.

Ein weiterer Anteil des Kopfgases m aus der Mitteldrucksäule 12 wird entsprechend dem Kopfgas k aus der Hochdrucksäule 11 behandelt, d.h. in einem Fallfilmverdampfer 18, der jedoch außerhalb des zweiten Säulenteils 14 der Niederdrucksäule angeordnet ist, verflüssigt, teilweise als Rücklauf auf die Mitteldrucksäule 12 aufgegeben und teilweise durch den Unterkühler 16 geführt und in den ersten Säulenteil 13 der Niederdrucksäule eingespeist (Strom r).

Bei dem Kopfströmen k und m aus der Hochdrucksäule 11 und der Mitteldrucksäule 12 handelt es sich um stickstoffangereicherte Ströme. Aus dem Sumpf der Hochdrucksäule 11 und der Mitteldrucksäule 12 werden hingegen sauerstoffangereicherte, flüssige Ströme abgezogen. Diese werden als Strom s zusammengefasst, ebenfalls durch den Unterkühler 16 geführt und in den ersten Säulenteil 13 der Niederdrucksäule eingespeist. Die Betriebsbrücke der Hochdrucksäule 11 und der Mitteldrucksäule 12 liegen beispielsweise bei etwa 4,8 bar (Hochdrucksäule) und 3,1 bar (Mitteldrucksäule, jeweils am Kopf). Die in den ersten Säulenteil 13 der Niederdrucksäule, die bei ca. 1,3 bar betrieben wird, eingespeisten Ströme i, I, r, und s, werden daher über entsprechende Entspannungsventile in den ersten Säulenteil 13 eingespeist.

Aus dem Sumpf des ersten Säulenteils 13 der Niederdrucksäule wird ein sauerstoffreicher Strom t entnommen, mittels einer Pumpe 19 druckerhöht und durch den Fallfilmverdampfer 18 geführt. Der hier durch teilweise verdampfte Strom t wird am Kopf des zweiten Säulenteils 14 der Niederdrucksäule aufgegeben. Ein flüssig verbliebener Anteil des Stroms t und ein Kopfgas des zweiten Säulenteils 14 werden vereinigt und als Strom u in den ersten Säulenteil 13 der Niederdrucksäule zurückgeführt. Ein auch nach dem Durchlaufen des Fallfilmverdampfers 17 flüssig verbliebender Anteil reichert sich als flüssiges Sumpfprodukt im Sumpf des zweiten Säulenteils 14 der Niederdrucksäule an und wird als Strom v in den Kondensator 15 eingespeist. Vom Kopf des Kondensators 15 wird ein gasförmiger Strom w abgezogen, durch den Hauptwärmetauscher 7 geführt und als gasförmiges Sauerstoffprodukt (GOX) mit etwa dem Druck der Niederdrucksäule bereitgestellt.

Sogenannter Unreinstickstoff (ohne Bezeichnung) kann vom Kopf des ersten Säulenteils 13 der Niederdrucksäule abgezogen, in dem Hauptwärmetauscher 7 erwärmt und aus der Luftzerlegungsanlage100 ausgeleitet werden. Der Unreinstickstoff kann beispielsweise zum Betrieb eines Verdampfungskühlers verwendet werden.

Es sei nochmals betont, dass die vorliegende Erfindung nicht auf die Luftzerlegungsanlage 100 im dem in der Figur 1 dargestellten Ausführungsbeispiel beschränkt ist. Die Erfindung eignet sich für eine Vielzahl weiterer Verfahren und Verfahrensvarianten, beispielsweise für Verfahren, die mit Innenverdichtung arbeiten, für einteilige Niederdrucksäulen, für reine Luftverflüssigungseinheiten usw.

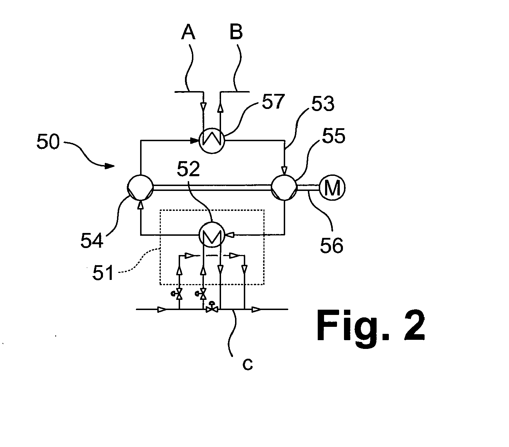

In Figur 2 ist eine geschlossene Wärmepumpe 50, wie sie gemäß einer Ausführungsform der Erfindung zur Erwärmung des Regeneriergases c während der erläuterten Heizphasen zum Einsatz kommen kann, schematisch dargestellt und insgesamt mit 50 bezeichnet. Die Wärmepumpe 50 kann die Heizeinrichtung 5 (vgl. Figur 1) bilden, wobei zusätzlich auch weitere Wärmequellen zur Erwärmung des Regeneriergases c verwendet werden können, beispielsweise herkömmliche elektrische Heizer. Hier als Teil der Wärmepumpe 50 dargestellt, aber auch extern von dieser anordenbar, ist ein Wärmespeicher 51 vorgesehen. Der Wärmespeicher 51 kann, wie erläutert, beispielsweise als Festbettwärmespeicher ausgebildet sein und eine geeignete Schüttung, Betonblock-Wärmespeichermodule und/oder Erdspeicher umfassen. Wie erläutert kann ein entsprechender Wärmespeicher 51 auch als Flüssigwärmespeicher ausgebildet sein, beispielsweise unter Verwendung von Thermoöl, Salzschmelzen und dergleichen.

In dem Wärmespeicher 51 oder auch durch diesen gebildet, beispielsweise in Form von Rohranordnungen, ist ein Wärmetauscher 52 vorgesehen, durch den während der erwähnten Heizphasen durch Einstellen einer entsprechenden Ventilanordnung (ohne Bezeichnung) der Regeneriergasstrom c geführt werden kann. Anteile des Regeneriergasstroms c können hierbei jedoch auch unter Umgehung des Wärmetauschers 52 durch den Wärmespeicher 51 geführt werden; die jeweiligen Anteile sind je nach Wärmebedarf und -angebot einstellbar. Wird kein warmes Regeneriergas benötigt, kann der Regeneriergasstrom c auch vollständig an dem Wärmetauscher 52 und dem Wärmespeicher 51 vorbeigeführt werden.

Die Wärmepumpe umfasst ferner einen Fluidkreislauf 53, in den eine Entspannungsmaschine 54 (oder ein Joule-Thompson-Drosselventil) und ein Verdichter 55 eingebunden sind. Bei der Ausführung mit einer Entspannungsmaschine sind die Entspannungsmaschine 54 und der Verdichter 55 vorzugsweise auf einer gemeinsamen Welle 56 angeordnet, die mittels eines Motors M angetrieben werden kann. Es handelt sich im dargestellten Beispiel also um einen Kompander aus Entspannungsmaschine 54, Verdichter 55, Welle 56 und Motor M.

Das Wärmeüberträgerfluid in dem Fluidkreislauf 53 liegt nach der Entspannung in der Entspannungsmaschine 54 bei einer tiefen Temperatur, beispielsweise teilverflüssigt, vor, und wird bei dieser einem Wärmetauscher 57 zugeführt. In dem Wärmetauscher 57 wird fühlbare Wärme eines Wärmeträgers, beispielsweise eines verdichteten Teilstroms A des Einsatzluftstroms a (oder von entsprechendem Kühlwasser) auf das Wärmeüberträgerfluid des Fluidkreislaufs 53 übertragen. Der Wärmeträger verlässt den Wärmetauscher 57 in abgekühlter Form (hier mit B bezeichnet).

Es sei betont, dass die Richtung, in der die jeweiligen Ströme A bzw. B, der Regeneriergasstrom c und das Wärmeüberträgerfluid des Fluidkreislaufs 53 zueinander geführt werden, in Entsprechung zu den jeweiligen Gegebenheiten und der erforderlichen Wärmeleistung auch angepasst werden können, ohne den Rahmen der vorliegenden Erfindung zu verlassen. Beispielsweise kann der Regeneriergasstrom c, wie in Figur 2 dargestellt, im Gegenstrom zu dem Wärmeüberträgerfluid in dem Fluidkreislauf 53 durch den Wärmetauscher 52 bzw. den Wärmespeicher 51 geführt werden. In gleicher Weise ist es jedoch möglich, den Regeneriergasstrom c gleichsinnig mit dem Wärmeüberträgerfluid in dem Fluidkreislauf 53 durch den Wärmetauscher 52 zu führen.

Das seinerseits erwärmte Wärmeüberträgerfluid in dem Fluidkreislauf 53 wird in dem Verdichter 55 verdichtet und erwärmt sich hierdurch weiter. Es liegt stromab des Verdichters 55 bei hoher Temperatur vor und kann daher eine entsprechende Wärmemenge auf den Wärmetauscher 52 bzw. den Wärmespeicher 51 übertragen. Das Fluid wird anschließend erneut der Entspannungsmaschine 54 zugeführt.

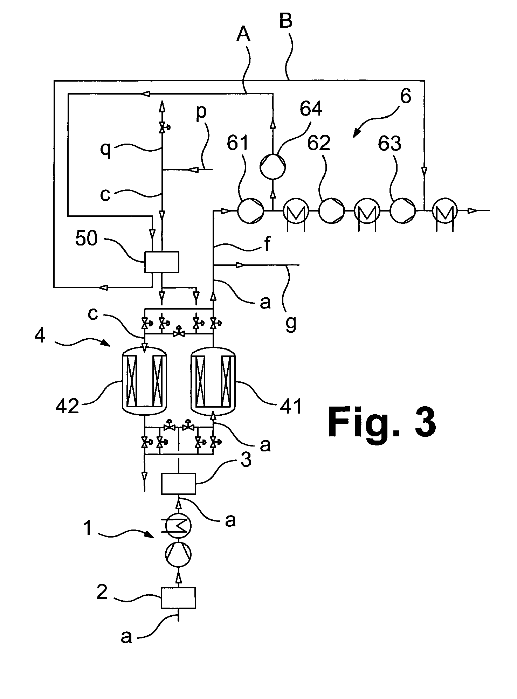

Der Wärmeträger wird gemäß einer Ausführungsform der Erfindung durch einen Teilstrom A eines Einsatzluftstroms a in einer Luftzerlegungsanlage 100 (vgl. Figur 1) gebildet. Dies wird in den nachfolgend erläuterten Figuren 3 bis 6 veranschaulicht, die jeweils Ausschnitte der Luftzerlegungsanlage 100 (vgl. Figur 1) zeigen. Auf eine erneute Darstellung des Hauptwärmetauschers 7 und des Destillationssäulensystems 10 wurde verzichtet, die weiteren Elemente und Ströme sind mit identischen Bezugszeichen wie in Figur 1 angegeben. Die Heizeinrichtung der Luftzerlegungsanlage 100, in Figur 1 mit 5 bezeichnet, ist hier durch die Wärmepumpe 50 der Figur 2 oder eine entsprechende Ausführungsform gebildet.

Insbesondere sei betont, dass die Wärmepumpe 50 nicht als geschlossene Wärmepumpe 50 mit einem Wärmeüberträgerfluid in einem Fluidkreislauf 53 gebildet sein muss, wie sie in Figur 2 dargestellt ist. Es ist vielmehr auch möglich, einen Teilstrom A oder dessen Kühlwasser selbst als Wärmeüberträgerfluid zu verwenden.

In Figur 3 ist der Nachverdichter 6 der Luftzerlegungsanlage 100 detaillierter veranschaulicht. Im dargestellten Beispiel umfasst der Nachverdichter 6 insgesamt drei Verdichterstufen 61, 62 und 63, denen jeweils ein Nachkühler (ohne Bezeichnung) nachgeordnet ist. Wie mehrfach erläutert, kann ein entsprechender Nachverdichter mehrere Verdichterstufen aufweisen, die mit geeigneten Antriebseinrichtungen und/oder miteinander und/oder mit entsprechendem Verdichter- bzw. Expansionsstufen weiterer Maschinen gekoppelt sein können.

Im dargestellten Beispiel wird stromab der ersten Verdichterstufe 61 des Nachverdichters 6 ein Teilstrom A des Stroms f (welcher wiederum durch einen Teil des gesamten Einsatzluftstroms a gebildet ist) in verdichteter Form entnommen und durch eine weitere Verdichterstufe 64 geführt. Der entsprechend erwärmte Teilstrom A dient als Wärmeträger oder als Wärmeüberträgerfluid für die Wärmepumpe 50. Der Teilstrom A wird durch die Wärmepumpe 50 bzw. zumindest einen Wärmetauscher geführt und verlässt diesen als abgekühlter Strom, hier mit B bezeichnet.

Wie in Figur 3 weiter veranschaulicht, wird der entsprechend abgekühlte Strom B stromab des Nachverdichters 6 und vorzugsweise stromauf des Nachkühlers erneut mit dem verbleibenden Anteil des Stroms f vereinigt. Das erfindungsgemäße Verfahren bzw. die Ausführungsform der Luftzerlegungsanlage 100, die in Figur 3 gezeigt ist, ermöglicht damit eine energetisch sinnvolle Abkühlung eines entsprechenden Teilstroms A bei gleichzeitig energiesparender Erwärmung des Regeneriergases c. Die in Figur 3 dargestellten Maßnahmen können auch in Kombination mit den in den nachfolgenden Figuren dargestellten Maßnahmen zum Einsatz kommen. Modifikationen an nachgeordneten Einrichtungen sind nicht erforderlich, da die stromab des Nachverdichters 6 bereitgestellte Luftmenge des Stroms f, deren Temperatur und deren Druck im Vergleich zu herkömmlichen Luftzerlegungsanlagen 100 unverändert sind.

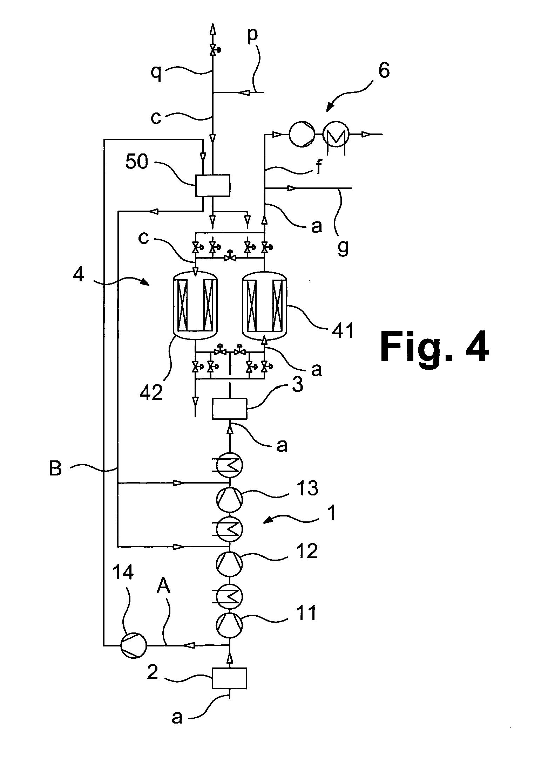

In Figur 4 ist der Nachverdichter 6 erneut vereinfacht dargestellt. In Anlagen ohne Nachverdichter 6 kann dieser auch entfallen. Die erfindungsgemäße Erwärmung des Regeneriergases c kann auch lediglich mittels eines Hauptverdichters 1 erfolgen. Die in Figur 4 gezeigten Maßnahmen können auch in Kombination mit den in Figur 3, 5 und 6 gezeigten Maßnahmen zum Einsatz kommen.

Der Hauptverdichter 1 ist in der Figur 4 mit ebenfalls drei Verdichterstufen 11, 12 und 13 und zugehörigen Nachkühlern gezeigt. Es versteht sich, dass der Hauptverdichter 1 auch mehrere oder weniger Nachverdichterstufen, Nachkühler usw. aufweisen kann. Auch hier kann der Hauptverdichter 1 mit einem gemeinsamen Antrieb betrieben werden, beispielsweise mittels eines Elektromotors, der zumindest zwei der Verdichterstufen 11 bis 13 des Hauptverdichters 1 antreibt.

Im dargestellten Beispiel wird ein Teilstrom A des Einsatzluftstroms a, die zuvor durch den Filter 2 geführt wurde, mittels einer weiteren Verdichterstufe 14 verdichtet und hierdurch erwärmt. Der Teilstrom A kann daher als Wärmeträger oder Wärmeüberträgerfluid in der Wärmepumpe 50 verwendet werden. Ein entsprechend abgekühlter Teilstrom B kann an beliebiger Stelle in den Hauptverdichter oder stromab des Hauptverdichters eingespeist werden, jedoch, da er noch Restgehalte an Wasser und Kohlendioxid aufweist, zumindest stromauf des Adsorbersatzes 4.

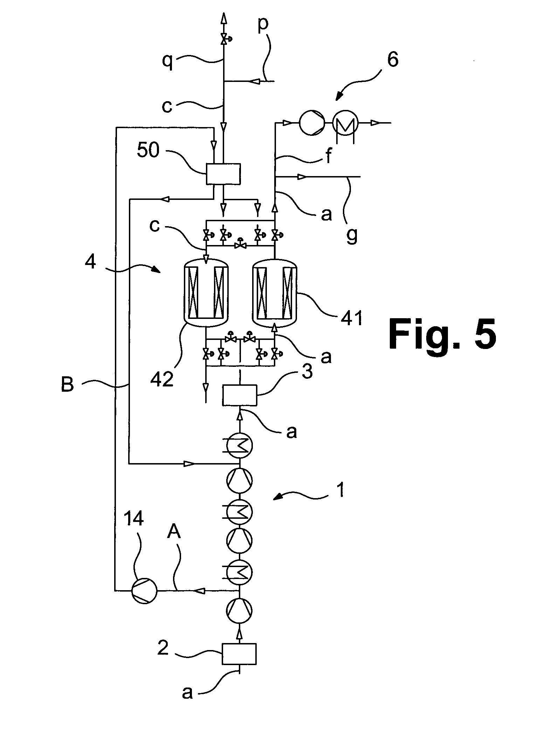

In Figur 5 ist eine weitere alternative Ausführungsform der vorliegenden Erfindung gezeigt, die ebenfalls in Kombination mit den in den Figuren 3, 4 und 6 gezeigten Maßnahmen zum Einsatz kommen kann. Die Entnahme des Teilstroms A, der als Wärmeträger in der Wärmepumpe 50 verwendet wird, erfolgt hier jedoch stromab einer ersten Verdichterstufe des Hauptverdichters 1, so dass dieser bereits bei einem entsprechenden Druck vorliegt. Die Entnahme erfolgt jedoch stromauf eines ersten Nachkühlers, so dass der Strom A noch eine ausreichende Wärmemenge enthält. Die weiteren Merkmale entsprechen im Wesentlichen jenen der Figur 4.

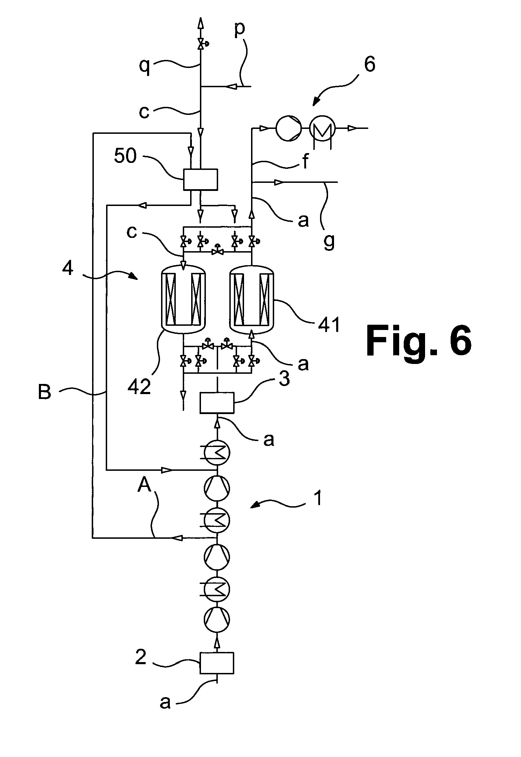

In Figur 6 ist eine weitere alternative Ausführungsform der vorliegenden Erfindung gezeigt, die ebenfalls in Kombination mit den in Figur 3 bis 5 gezeigten Maßnahmen zum Einsatz kommen kann. Die Entnahme des Teilstroms A, der als Wärmeträger in der Wärmepumpe 50 verwendet wird, erfolgt hier jedoch stromab einer zweiten Verdichterstufe des Hauptverdichters 1, so dass dieser im Vergleich zu Figur 5 bei einem höheren Druck und ggf. bei höherer Temperatur vorliegt. Die Entnahme erfolgt auch hier stromauf eines entsprechenden Nachkühlers.

Aufgrund der bereits vorliegenden weiteren Verdichtung kann hier auf eine weitere Verdichterstufe (vgl. Verdichterstufe 14 der Figur 5) verzichtet werden.

## Patentansprüche

1. Verfahren zur Gewinnung zumindest eines Luftprodukts in einer Luftbehandlungsanlage (100), in der einem Einsatzluftstrom (a) mittels eines Adsorbersatzes (4) mit zumindest zwei Adsorbereinheiten (41, 42) zumindest Wasser und/oder Kohlendioxid entzogen wird, wobei der Einsatzluftstrom (a) jeweils nur durch eine oder nur durch einen Teil der Adsorbereinheiten (41, 42) geführt und währenddessen zeitweise ein erwärmtes Regeneriergas (c) durch eine andere oder durch einen anderen Teil der Adsorbereinheiten (41, 42) geführt wird, **dadurch gekennzeichnet, dass** zum Erwärmen des Regeneriergases (c) einem Teilstrom (A) des Einsatzluftstroms (a) Wärme entzogen wird und die Wärme zur Übertragung auf das Regeneriergas (c) bereitgestellt wird, und dass zur Bildung des Teilstroms (A) Luft des Einsatzluftstroms (a) verwendet wird, die stromauf und/oder stromab zumindest einer Verdichterstufe (11-13, 61-63) zumindest eines mehrstufigen Verdichters (1, 6) der Luftbehandlungsanlage (100) von Luft des Einsatzluftstroms (a), die durch die zumindest eine Verdichterstufe (11-13, 61-63) geführt wird, abgezweigt und nach dem Entziehen der Wärme stromauf eines Destillationssäulensystems (10) der Luftbehandlungsanlage (100) zumindest teilweise wieder mit der nach dem Abzweigen verbliebenen Luft vereinigt wird.

2. Verfahren nach Anspruch 1, bei dem zur Bereitstellung der Wärme zur Übertragung auf das Regeneriergas (c) zumindest eine Wärmepumpe (50) verwendet wird, in der der Teilstrom (A) oder zumindest ein mittels diesem erwärmtes weiteres Fluid als Wärmeüberträgerfluid verwendet wird.

3. Verfahren nach Anspruch 2, bei dem zumindest eine Wärmepumpe (50) verwendet wird, in der zumindest ein zumindest teilweise unter Verwendung des Teilstroms (A) erwärmtes Wärmeüberträgerfluid in einem Fluidkreislauf (53) zyklisch zwischen zumindest zwei Druckstufen geführt wird.

4. Verfahren nach Anspruch 2 oder 3, bei dem das zumindest eine Wärmeüberträgerfluid mittels zumindest eines Kompanders (54 - 56, M) und/oder mittels zumindest eines Drosselventils und mittels zumindest eines Verdichters verdichtet und entspannt wird.

5. Verfahren nach einem der vorstehenden Ansprüche, bei dem der Teilstrom (A) bei Atmosphärendruck, bei einem überatmosphärischen Druckniveau und/oder bei einem maximalen Druckniveau, auf das Luft des Einsatzluftstroms (a) verdichtet wird, von der Luft des Einsatzluftstroms (a) abgezweigt wird.

6. Verfahren nach Anspruch 5, bei dem der Teilstrom (A) ausgehend von dem Atmosphärendruck, dem überatmosphärischen Druckniveau und/oder dem maximalen Druckniveau verdichtet wird.

7. Verfahren nach einem der vorstehenden Ansprüche, bei dem zur Bildung des Teilstroms (A) Luft des Einsatzluftstroms (a) verwendet wird, die stromauf und/oder stromab zumindest einer Verdichterstufe (11-13) eines mehrstufigen Hauptverdichters (1) der Luftbehandlungsanlage (100) von durch die zumindest eine Verdichterstufe (11-13) geführter oder zu führender Luft des Einsatzluftstroms (a) abgezweigt wird.

8. Verfahren nach Anspruch 7, bei dem der Teilstrom (A) nach dem Entziehen der Wärme stromab zumindest einer Verdichterstufe (11-13) des Hauptverdichters (1) zumindest teilweise mit Luft des Einsatzluftstroms (a) vereinigt wird.

9. Verfahren nach einem der vorstehenden Ansprüche, bei dem zur Bildung des Teilstroms (A) Luft des Einsatzluftstroms (a) verwendet wird, die stromauf und/oder stromab zumindest einer Verdichterstufe (61-63) eines mehrstufigen Nachverdichters (6) der Luftbehandlungsanlage (100) von durch die zumindest eine Verdichterstufe (61-63) geführter oder zu führender Luft eines Anteils (f) des Einsatzluftstroms (a) abgezweigt wird.

10. Verfahren nach Anspruch 9, bei dem der Teilstrom (A) nach dem Entziehen der Wärme stromab zumindest einer Verdichterstufe (61-63) des Nachverdichters (6) zumindest teilweise mit Luft des Anteils (f) des Einsatzluftstroms (a) vereinigt wird.

11. Verfahren nach Anspruch 9 oder 10, bei dem eine als Luftzerlegungsanlage ausgebildete Luftbehandlungsanlage (100) verwendet wird und der Teilstrom (A) nach dem Entziehen der Wärme teilweise in ein Destillationssäulensystem (10) der Luftzerlegungsanlage eingespeist wird.

12. Verfahren nach einem der vorstehenden Ansprüche, bei dem dem Teilstrom (A) entzogene Wärme in wenigstens einem Wärmespeicher (51) gespeichert und aus diesem zeitweise auf das Regeneriergas (2) übertragen wird.

13. Verfahren nach Anspruch 12, bei dem ein Wärmespeicher mit wenigstens einem flüssigen und/oder festen Speichermedium, insbesondere in wenigstens einem lsolierbehälter, verwendet wird.

14. Luftbehandlungsanlage (100), mit wenigstens einem Adsorbersatz (4) mit zumindest zwei Adsorbereinheiten (41, 42), die dafür eingerichtet sind, einem Einsatzluftstrom (a) zumindest Wasser und/oder Kohlendioxid zu entziehen, und Mitteln, die dafür eingerichtet sind, den Einsatzluftstrom (a) jeweils nur durch eine oder jeweils nur durch einen Teil der Adsorbereinheiten (41, 42) zu führen und währenddessen zeitweise ein erwärmtes Regeneriergas (c) durch eine andere oder durch einen anderen Teil der Adsorbereinheiten (41, 42) zu führen, und mit einem Destillationssäulensystem (10) und wenigstens einem mehrstufigen Verdichter (1, 6), **gekennzeichnet durch** Mittel, die dafür eingerichtet sind, zum Erwärmen des Regeneriergases (c) einem Teilstrom (A) des Einsatzluftstroms (a) Wärme zu entziehen und zur Übertragung auf das Regeneriergas (c) bereitzustellen, und Mittel, die dafür eingerichtet sind, den Teilstrom (A) zumindest teilweise aus Luft des Einsatzluftstroms (a) zu bilden, die stromauf und/oder stromab zumindest einer Verdichterstufe (11-13, 61-63) des zumindest einen mehrstufigen Verdichters (1, 6) von Luft des Einsatzluftstroms (a), die **durch** die zumindest eine Verdichterstufe (11-13, 61-63) geführt wird, abgezweigt und nach dem Entziehen der Wärme stromauf des Destillationssäulensystems (10) zumindest teilweise wieder mit der nach dem Abzweigen verbliebenen Luft vereinigt wird.

15. Luftbehandlungsanlage (100), die zur Durchführung eines Verfahrens nach einem der Ansprüche 1 bis 13 eingerichtet ist.
